# EUROPEAN PATENT APPLICATION

(11) **EP 4 678 937 A1**
(43) Date of publication of application: **14.01.2026**
(21) Application number: 24766697.7
(22) Date of filing: 23.01.2024
(51) Int. Cl.: F16H 25/22

(54) **LINEAR MOTION DEVICE, AND GUIDE SHAFT AND MOBILE BODY FOR USE IN SAME**

(30) Priority: 06.03.2023 JP 2023033833
(71) Applicant: NSK LTD., Tokyo 141-8560 (JP)
(72) Inventor: OKUBO, Takashi, Fujisawa-shi, Kanagawa 251-8501 (JP); KOBAYASHI, Yuki, Fujisawa-shi, Kanagawa 251-8501 (JP)
(74) Representative: Grünecker Patent- und Rechtsanwälte PartG mbB
(86) International application number: PCT/JP2024/001871
(87) International publication number: WO 2024/185322

(57) **Abstract**

This linear motion device comprises: a guide shaft which is provided with a first ball rolling surface on the outer circumferential surface; a mobile body which is provided with a second ball rolling surface on the inner circumferential surface so as to face the first ball rolling surface and which moves relative to the guide shaft; and balls which roll in a space formed between the first ball rolling surface and the second ball rolling surface. In at least one of the first ball rolling surface and the second ball rolling surface, the average surface roughness Sa excluding a prescribed ball rolling-direction component is at least 0.1 µm.

## Description

### TECHNICAL FIELD

The present invention relates to a linear motion device and a guide shaft and a moving body used therein.

### BACKGROUND ART

In a machine tool, a linear motion device such as a ball screw or a linear guide is used, but in order to improve processing accuracy, it is necessary to ensure a smooth operation of the linear motion device and to have a structure that is not easily worn. In order to ensure the smooth operation and provide a structure that is not easily worn, it is preferable that a lubricant is interposed between a ball and a ball rolling surface.

In a ball screw or the like, since a lubricant cannot be retained on a ball rolling surface on a structure, a lubrication method is adopted in which the lubricant is periodically supplied via a pipe disposed in a nut or the like, and the lubricant is transferred to the ball rolling surface via a ball as the nut or the like moves. Therefore, it is advantageous to retain a larger amount of lubricant on the ball rolling surface for a longer time.

In addition, a fine unevenness is formed on the ball rolling surface of the screw shaft or the nut as processed traces, and the lubricant is accumulated in a concave portion (valley portion) of the unevenness to contribute to lubrication. It is generally said that a convex portion (peak portion) of the unevenness is low, and the wear of the linear motion device and the counterpart material decreases as the smoothness increases.

Here, the ball rolling surface is generally machined by grinding or turning finish, and the processed surface is controlled by surface roughness of a ball rolling direction component in the related art. However, there is a problem that the retention of the lubricant cannot be appropriately evaluated only by the surface roughness. Specifically, even if the surface roughness of the ball rolling surface is within a specified range, lubricating oil may be difficult to be supplied to and retained on a boundary surface when the ball rolls, and thus friction may increase and wear may occur particularly under low-speed operating conditions in which an oil film is difficult to form.

On the other hand, in Patent Literature 1, it is proposed to realize a highly accurate and long-life ball screw by limiting numerical values of an arithmetic average height (Sa) of a surface, a surface maximum height (Sz), a level difference (Sk) of a core portion, an average height (Spk) of a protruding peak portion, and an average depth (Svk) of a protruding valley portion on a processed surface of the ball rolling surface of the ball screw.

### CITATION LIST

### PATENT LITERATURE

Patent Literature 1: JP2019-39525A

### SUMMARY OF INVENTION

### TECHNICAL PROBLEM

However, according to the research results of the present inventors, it has been found that even when a ratio of the protruding peak portion and the protruding valley portion as a factor related to the surface roughness of the processed surface is set to the above range, the wear was not sufficiently prevented. Therefore, it is required to provide a linear motion product in which the surface properties of the ball rolling surface are appropriately evaluated.

The present invention has been made in view of the above problem, and an object of the present invention is to provide a linear motion device including a ball rolling surface appropriately evaluated using a new evaluation method different from a method in the related art, and a guide shaft and a moving body used in a linear motion device.

### SOLUTION TO PROBLEM

A linear motion device according to the present invention includes:
a guide shaft having a first ball rolling surface on an outer peripheral surface thereof;
a moving body having a second ball rolling surface facing the first ball rolling surface on an inner peripheral surface thereof and moving relative to the guide shaft; and
a ball rolling in a space formed between the first ball rolling surface and the second ball rolling surface, in which
an average surface roughness Sa of at least one of the first ball rolling surface and the second ball rolling surface excluding a predetermined ball rolling direction component is 0.1 µm or more.

A guide shaft according to the present invention is a guide shaft used in a linear motion device,
the linear motion device includes
   a guide shaft having a first ball rolling surface on an outer peripheral surface thereof,
   a moving body having a second ball rolling surface facing the first ball rolling surface on an inner peripheral surface thereof and moving relative to the guide shaft, and
   a ball rolling in a space formed between the first ball rolling surface and the second ball rolling surface, and
an average surface roughness Sa of the first ball rolling surface excluding a predetermined ball rolling direction component is 0.1 µm or more.

A moving body according to the present invention is a moving body used in a linear motion device,
the linear motion device includes
   a guide shaft having a first ball rolling surface on an outer peripheral surface thereof,
   a moving body having a second ball rolling surface facing the first ball rolling surface on an inner peripheral surface thereof and moving relative to the guide shaft, and
   a ball rolling in a space formed between the first ball rolling surface and the second ball rolling surface, and
an average surface roughness Sa of the second ball rolling surface excluding a predetermined ball rolling direction component is 0.1 µm or more.

### ADVANTAGEOUS EFFECTS OF INVENTION

According to the present invention, it is possible to provide a linear motion device including a ball rolling surface appropriately evaluated using a new evaluation method different from a method in the related art, and a guide shaft and a moving body used therein.

### BRIEF DESCRIPTION OF DRAWINGS

FIG. 1 is a cross-sectional view illustrating a ball screw as an example of a linear motion device.
FIG. 2A is an enlarged image illustrating a surface of a ball rolling surface processed by the related art, and FIG. 2B is a diagram schematically illustrating a state where a ball B rolls on a ball rolling surface F processed by the related art.
FIG. 3A is an enlarged image illustrating a surface of a ball rolling surface having an average roughness Sa proposed by the present inventors, and FIG. 3B is a diagram schematically illustrating a state where the ball B rolls on the ball rolling surface F having the average roughness Sa proposed by the present inventors.
FIG. 4A is an enlarged image illustrating a surface of the ball rolling surface before a shot peening process is performed, and FIG. 4B is an enlarged image illustrating a surface of the ball rolling surface after the shot peening process is performed.
FIG. 5 is a schematic view illustrating a mode of jetting a shot material to the ball rolling surface.
FIG. 6 illustrates an image of the surface property of the ball rolling surface of the ball screw subjected to the shot peening process under different conditions, together with the average surface roughness Sa.
FIG. 7 is a graph illustrating the average surface roughness Sa on a horizontal axis and a dynamic friction torque reduction rate in a low-speed wear test on a vertical axis for each embodiment.
FIG. 8A is an image before applying a FFT filter based on data of the surface property, and FIG. 8B is an image after applying the FFT filter based on the data of the same surface property.
FIG. 9 illustrates, together with the average surface roughness Sa, an image of surface properties of the ball rolling surface of the ball screw in an embodiment obtained by performing the shot peening process under different conditions.
FIG. 10 is a graph illustrating the average surface roughness Sa on the horizontal axis and the dynamic friction torque reduction rate in the low-speed wear test on the vertical axis for each example.
FIG. 11 is a diagram illustrating a relation between a rotation speed and a dynamic friction torque in a ball screw of the related art and a ball screw having a ball rolling surface in which the average surface roughness Sa excluding a ball rolling direction component is 0.1 µm or more.

### DESCRIPTION OF EMBODIMENTS

Hereinafter, an embodiment of the present invention will be described in detail with reference to the drawings.

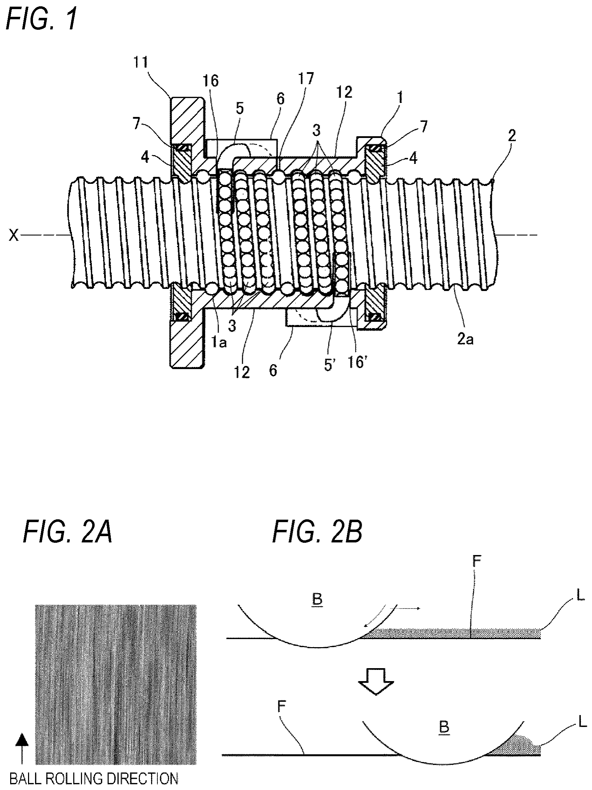

FIG. 1 is a cross-sectional view illustrating a ball screw as an example of a linear motion device.

As illustrated in FIG. 1, the ball screw includes a nut 1 (moving body), a screw shaft 2 (guide shaft), a plurality of balls 3, ring-shaped seals 4, tubes (circulation members) 5 and 5', and tube pressers 6. Spiral grooves (inner peripheral screw grooves) 1a are formed on an inner peripheral surface of the nut 1, and spiral grooves (outer peripheral screw grooves) 2a are formed on an outer peripheral surface of the screw shaft 2. The balls 3 are disposed between raceways formed by the spiral grooves 1a of the nut 1 and the spiral grooves 2a of the screw shaft 2. A flange 11 is formed at one axial end of the nut 1. A surface of the spiral groove 1a of the nut (moving body) 1 corresponds to a second ball rolling surface, and a surface of the spiral groove 2a of the screw shaft 2 corresponds to a first ball rolling surface.

In the present embodiment, the seals 4 disposed at both ends of the nut 1 are contact seals whose inner peripheries are in contact with an outer periphery of the screw shaft 2, and a space between the outer peripheries of the seals 4 and the inner periphery of the nut 1 is sealed by O-rings 7.

The ball screw has two circulation circuits each including a raceway (a rolling passage formed by the spiral groove 1a and the spiral groove 2a) of the ball 3 and the tubes 5 and 5'.

A flat portion 12, 12 for arranging the two tubes 5 and 5' is formed on an outer periphery of a portion of the nut 1 other than the flange 11. Tube attachment holes 16 and 16' for attaching the tubes 5 and 5' are formed in the flat portion 12. Ends of the tubes 5 and 5' bent in a U shape are inserted into the tube attachment holes 16 and 16' and fixed by the tube pressers 6 and 6.

The lubricant is supplied into the nut 1 through a lubricant supply passage 17. The lubricant supply passage 17 extends in a radial direction of the nut 1 and penetrates through inner and outer peripheral surfaces, and has an opening as an outer end that opens outward and an opening as an inner end that is located in the vicinity of an offset point on an inner peripheral surface of the nut 1 (or between a first nut and a second nut to be described later). Here, "vicinity" refers to a range within ± 1 pitch of the spiral groove 1a in the axial direction from the offset point. Although an example in which the lubricant supply passage 17 is provided with one row of spiral grooves 1a with the offset point interposed therebetween has been described, the lubricant supply passage 17 may be disposed between the spiral grooves 1a or at a groove bottom of a Gothic arc of the spiral grooves 1a.

The ball rolling surfaces of the screw shaft and the nut in the ball screw of the related art are processed surfaces mainly having surface roughness in a ball rolling direction component by grinding or turning finishing.

FIG. 2A illustrates an enlarged image of a surface of a ball rolling surface processed by the related art, and a degree of a depth of an unevenness is indicated by a gradation. FIG. 2B is a diagram schematically illustrating a state where a ball B rolls on a ball rolling surface F processed by the related art, and a lubricant is denoted by a reference sign L.

Since the ball rolling surface F illustrated in FIG. 2A has a small surface roughness excluding a ball rolling direction component, there is a problem that the lubricant L is scraped off by the rolling ball B as illustrated in FIG. 2B, and the lubricant L is difficult to be retained on a boundary surface with the ball rolling surface F when the ball B rolls. Therefore, in a low-speed operating condition in which a lubricant film is less likely to be formed, friction increases and wear is likely to occur.

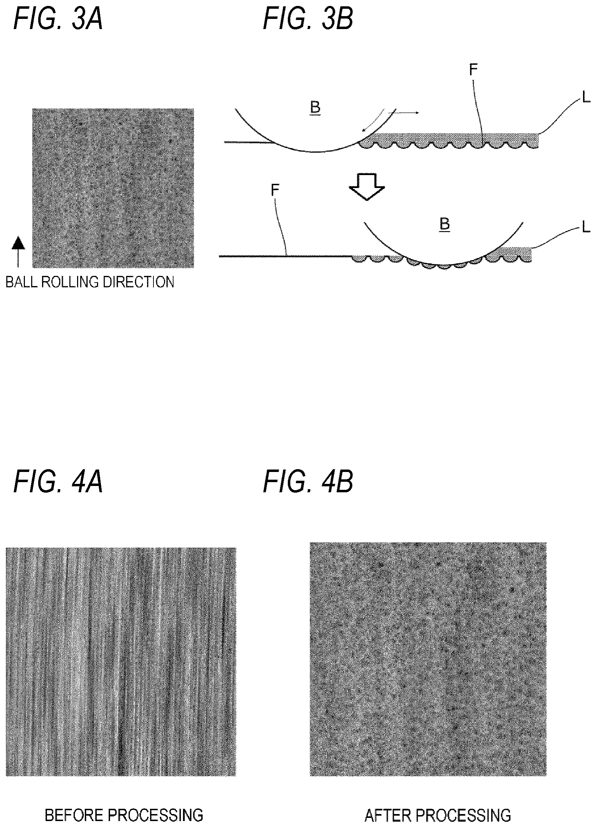

FIG. 3A illustrates an enlarged image of a surface of a ball rolling surface having an average roughness Sa proposed by the present inventors, and the degree of the depth of the unevenness is indicated by the gradation. FIG. 3B is a diagram schematically illustrating a state where the ball B rolls on the ball rolling surface F having the average roughness Sa proposed by the present inventors, and the lubricant is denoted by the reference sign L.

According to the proposal of the present inventors, as illustrated in FIG. 3A, by securing a large surface roughness Sa excluding a ball rolling direction component, as illustrated in FIG. 3B, the lubricant L can be retained in minute recesses of the ball rolling surface F. The lubricant film forming ability at a boundary between the ball B and the ball rolling surface F can be improved by the oil accumulation effect and the dynamic pressure effect, and friction can be reduced and wear can be prevented.

Here, as a method of forming a surface roughness excluding a ball rolling direction component, the present inventors performed a shot peening process on a ball rolling surface of a screw shaft or a nut, and verified the effect thereof.

FIG. 4A is an enlarged image illustrating a surface of a ball rolling surface before a shot peening process (immediately after a grinding process) is performed, and FIG. 4B is an enlarged image illustrating a surface of a ball rolling surface after the shot peening process is performed. Although the degree of the depth of the unevenness is indicated by the gradation, the surface mainly has the surface roughness in which the ball rolling direction component by the grinding processing is the vertical direction.

### (Shot Peening Process)

An example of a shot peening process is illustrated. For example, a material made of high carbon steel or the like is processed into a shape of a screw shaft or a nut, and after heat treatment, a ball rolling surface is formed by the cutting processing or grinding processing, and a shot peening process is further performed. By this shot peening process, the shot material is made to collide with the ball rolling surface at a high speed, and an apex of a streaky processing trace due to the cutting processing or the grinding processing as illustrated in FIG. 4A is crushed, so that a large number of fine unevenness can be formed.

As the shot material used for the shot peening process, particles (shot material) made of ceramic such as steel or SiC can be used. A shot material having a particle diameter of 30 µm to 60 µm is preferable, and a shot material having a particle diameter of 40 µm to 50 µm is more preferable. The smaller the shot material, the finer the formed unevenness. A shape of the shot material may be various shapes other than a spherical shape. A shot pressure is preferably 0.3 MPa to 0.5 MPa, and more preferably 0.4 MPa to 0.5 MPa.

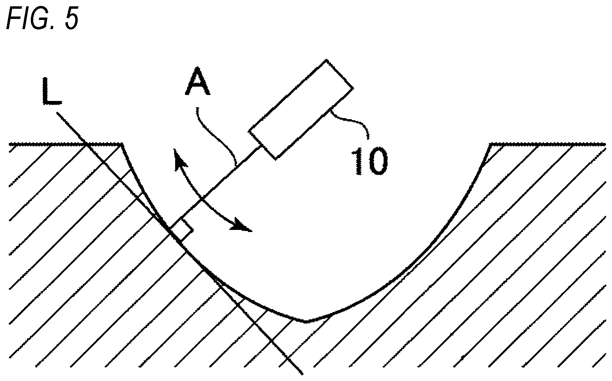

Regarding an injection angle of the shot material to the ball rolling surface, it is preferable to cause the shot material to collide perpendicularly to a tangent line of a cross section of the ball rolling surface. That is, although FIG. 5 is a cross-sectional view of a Gothic arch-shaped ball rolling surface, it is preferable to inject the shot material while swinging an injection nozzle 10 obliquely upward or obliquely downward on the same cross section so that a line A passing through the center of an injection port of the injection nozzle 10 and a tangent line L of the ball rolling surface are orthogonal to each other. Accordingly, the shot material collides with the ball rolling surface so as to be orthogonal thereto, and the unevenness can be efficiently formed.

Since the ball rolling surface is a spiral groove, in order to uniformly perform blasting on a surface of the spiral groove, it is preferable to perform blasting while rotating a shot target (a screw shaft or a nut) and moving the injection nozzle in an axial direction in synchronization with the rotation of the shot target. Furthermore, a plurality of injection nozzles may be used to perform blasting simultaneously on arc-shaped surfaces on both sides of the surface of the spiral groove. Accordingly, the surface of the spiral groove can be efficiently subjected to blasting.

As is clear from the comparison between FIGS. 4A and 4B, numerous dimple recesses are formed by the shot peening process, and the surface contains components other than the ball rolling direction component. However, according to the study of the present inventors, it has been found that a dynamic friction torque reduction rate of the ball rolling surface is not improved only by the shot peening process. The processing of the ball rolling surface is not limited to shot peening, and similar effects can be obtained by sandblasting, shot blasting, surface roll processing, barrel processing, laser texturing, or the like.

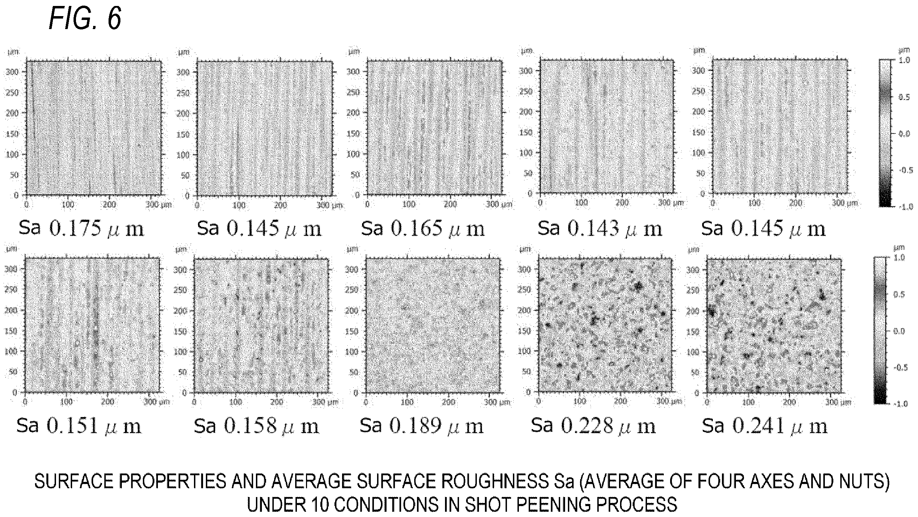

FIG. 6 illustrates an image of the surface property of the ball rolling surface of the nut subjected to the shot peening process under different conditions, together with the average surface roughness Sa. Specifically, a nut of a ball screw device was produced by using a high-carbon steel material, forming the material into a predetermined shape according to a method in the related art, performing quenching, and then performing finish polishing on a ball rolling surface. A three-dimensional roughness shape and a surface roughness waveform were measured using a surface roughness meter to determine the average surface roughness Sa.

In ISO25178, which is an international standard defining a method of evaluating a surface roughness, a level difference of a core portion is defined as Sk, an average height of protruding peak portions is defined as Spk, and an average depth of protruding valley portions is defined as Svk. A portion higher than the core portion is the protruding peak portion, a portion lower than the core portion is the protruding valley portion, and each ratio of the protruding peak portion and the protruding valley portion can be obtained from a load curve. An arithmetic average roughness Sa is obtained by extracting only a reference length L in a direction of an average line from a roughness curve based on ISO 25178, taking an x axis in a direction of an average line of the extracted portion and a y axis in a direction of a longitudinal magnification, the roughness curve is represented by y =f (x), and a value obtained by the above equation is expressed in units of µm.

A low-speed wear test was performed under the following conditions using ball screws having nuts treated under different conditions.
Specifications of ball screw: shaft diameter 32 mm, screw groove lead 5 mm
Lubricant used: VG68 oil
Rotation speed of screw shaft: 1 min⁻¹, stroke: 150 mm
Number of times of reciprocations: 10 times

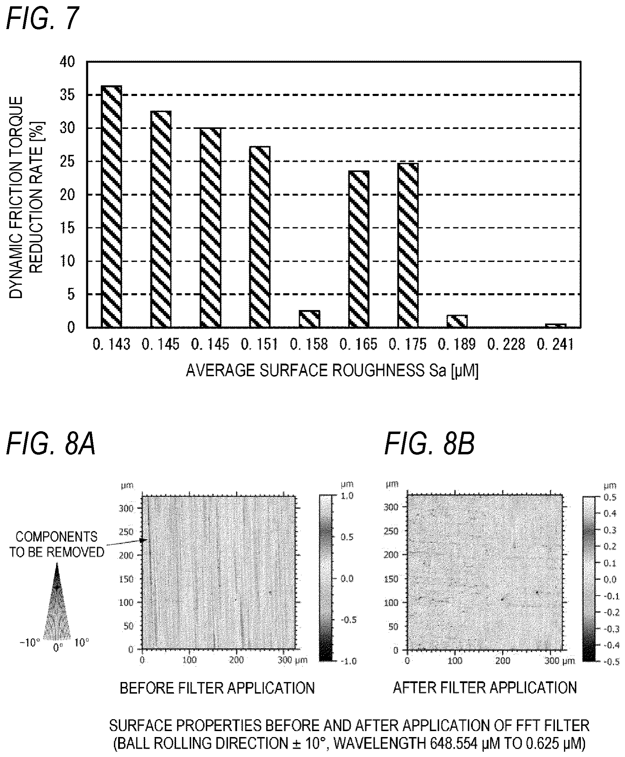

FIG. 7 is a graph illustrating a ball screw having a nut according to each embodiment, in which a horizontal axis represents the average surface roughness Sa of the ball rolling surface, and a vertical axis represents a dynamic friction torque reduction rate in the low-speed wear test. The dynamic friction torque reduction rate is a rate at which a dynamic friction torque of the ball screw before the low-speed wear test is set to 100% and a dynamic friction torque of the ball screw after the low-speed wear test is decreased. As is clear from FIG. 7, no clear correlation was confirmed between the average surface roughness Sa and the dynamic friction torque reduction rate. The present inventors considered this test result.

Here, the reason why the present inventors focused on the dynamic friction torque reduction rate will be described. The ball screw is often used in a state where a preload is applied for the purpose of improving rigidity and removing backlash, and there is a correlation between the magnitude of the preload and the dynamic friction torque, and the amount of preload can be estimated from the dynamic friction torque. As the wear of the ball screw progresses, an amount of preload decreases and the rigidity decreases. An amount of decrease in the amount of preload can be estimated by measuring an amount of decrease in a dynamic friction torque, and the smaller the amount of decrease in the dynamic friction torque, the higher the wear resistance of the ball screw.

### (Influence due to Low-Speed Wear Test)

The present inventors have assumed that the reason why no clear correlation is confirmed between the average surface roughness Sa and the dynamic friction torque reduction rate is that the ball rolling direction component due to the grinding processing differs depending on the ball screw. That is, the present inventors have assumed that the measured average surface roughness includes a ball rolling direction component by the finishing of the ball rolling surface and a component other than the ball rolling direction component by the shot peening process, and when a difference due to the finishing of the ball screw is large, a value of the average surface roughness is not stable, and thus a correlation with a wear test result may not be obtained.

Based on the above assumption, the present inventors applied an FFT filter to data of the surface property under the conditions of a ball rolling direction of ± 10° and a wavelength of 648.554 µm to 0.625 µm (performed a process using a frequency) using a method for evaluating a surface roughness defined in ISO25178, and calculated the average surface roughness Sa excluding a ball rolling direction component. This is referred to as the average surface roughness Sa excluding a predetermined ball rolling direction component.

As for the application of the FFT filter, a direction of 0° of a grinding grain is visually determined, and a surface roughness component in the ± 10° direction is removed. Further, under a condition of a wavelength of 648.554 µm to 0.625 µm, it is possible to cope with a frequency of the unevenness of a surface in the general grinding processing or cutting processing of the ball rolling surface of the ball screw.

FIG. 8A is an image before applying a FFT filter based on data of the surface property, and FIG. 8B is an image after applying the FFT filter based on the data of the same surface property. Although the depth of the unevenness is indicated by the gradation, it can be seen from the comparison between FIGS. 8A and 8B that the ball rolling direction component is effectively removed by applying the FFT filter. That is, the purpose of applying the FFT filter is to evaluate only the roughness due to the minute dimples (concave portions) holding the lubricant on the ball rolling surface.

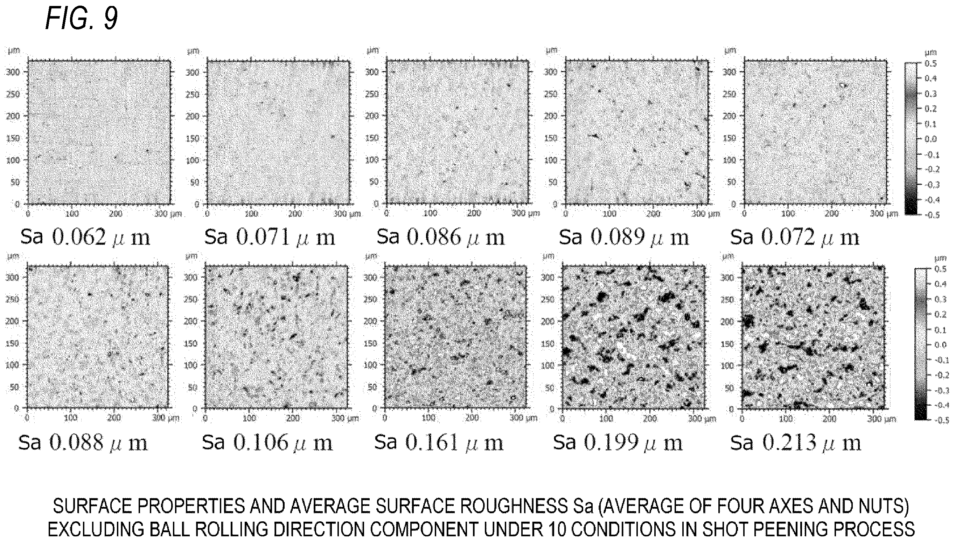

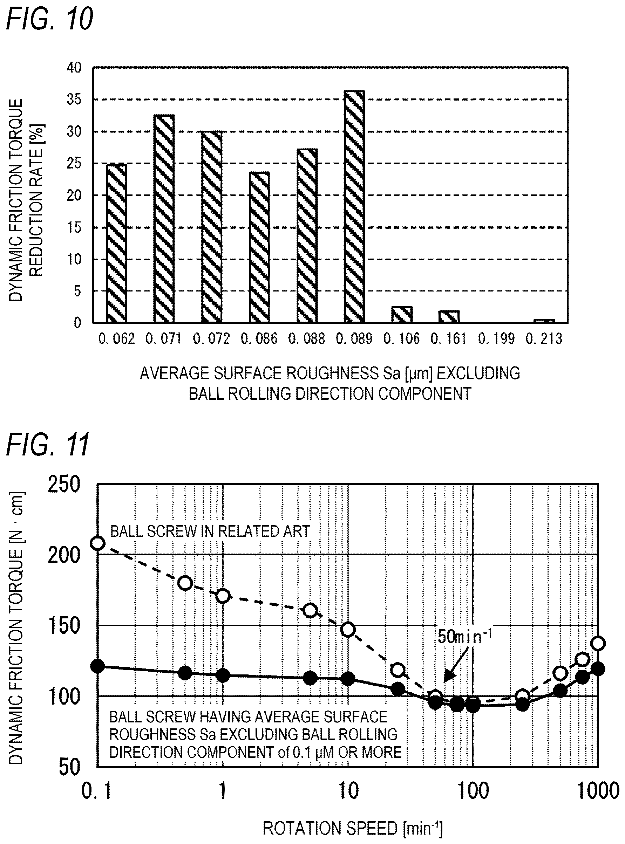

FIG. 9 illustrates, together with the average surface roughness Sa, an image of the surface properties of the ball rolling surface of a nut obtained by performing the shot peening process using a ceramic shot material having a particle diameter of 30 µm to 63 µm under the condition of a shot pressure of 0.3 MPa to 0.5 MPa. FIG. 10 is a graph illustrating a ball screw having a nut according to each embodiment, in which the horizontal axis represents the average surface roughness Sa of the ball rolling surface, and the vertical axis represents the dynamic friction torque reduction rate in the low-speed wear test. The conditions of the low-speed wear test are as follows.
Specifications of ball screw: shaft diameter 32 mm, screw groove lead 5 mm
Lubricant used: VG68 oil
Rotation speed of screw shaft: 1 min⁻¹, stroke: 150 mm
Number of times of reciprocations: 10 times

As is clear from FIG. 10, a clear correlation appeared between the average surface roughness Sa excluding a ball rolling direction component and the dynamic friction torque reduction rate. According to this correlation, it was confirmed that the dynamic friction torque reduction rate was reduced in the ball rolling surface in which the average surface roughness Sa excluding a ball rolling direction component is 0.1 µm or more, and an effect of preventing wear was exhibited. The ball rolling surface in which the average surface roughness Sa excluding a ball rolling direction component is 0.1 µm or more can be realized by adjusting the size of the particles of the shot peening, the shot pressure, and the like.

FIG. 11 is a diagram illustrating a relation between a rotation speed and a dynamic friction torque in a ball screw of the related art and a ball screw having a ball rolling surface in which the average surface roughness Sa excluding a ball rolling direction component is 0.1 µm or more. Since the dynamic friction torque of the latter is smaller than that of the former under a low-speed operating condition of a rotation speed of 50 min⁻¹ or less, it was confirmed that the lubricant film forming ability is improved and the friction is reduced even under the low-speed operating condition in which the lubricant film is generally not easily formed. As described above, the ball rolling surface of the nut of the ball screw has been studied, but the present invention can be similarly applied to a surface of a ball, a ball rolling surface of a screw shaft, or a ball rolling surface of a slider of a linear guide.

More specifically, as the ball screw in the related art is driven at a lower-speed, an amount of the lubricant flowing between the ball and the ball rolling surface decreases and the lubricant film becomes thinner, so that a metal contact area increases and the dynamic friction torque tends to increase. A high-precision and long-life ball screw having a ball rolling surface in which the average surface roughness Sa excluding a ball rolling direction component is 0.1 µm or more tends to form an oil film between the ball and the ball rolling surface even when the ball screw is driven at a low-speed, and thus an increase in metal contact area and dynamic friction torque is reduced.

The average surface roughness Sa excluding a ball rolling direction component is preferably 0.4 µm or less. If the average surface roughness Sa exceeds 0.4 µm, the operability and running noise of the linear motion device are adversely affected.

The present invention is not limited to the above-described embodiments. Any component in the above-described embodiments can be modified within the scope of the present invention. In addition, any component can be added or omitted in the above-described embodiments. For example, the present invention can be applied to various ball screws such as a circulation top ball screw, a tube ball screw, a deflector ball screw, and an end cap ball screw, and can also be applied to a linear motion device such as a linear guide having a slider as a moving body.

Although various embodiments have been described above, it is needless to say that the present invention is not limited to these examples. It is apparent to those skilled in the art that various changes or modifications can be conceived within the scope described in the claims, and it is understood that the changes or modifications naturally fall within the technical scope of the present invention. In addition, the components described in the above embodiments may be combined in any manner without departing from the spirit of the invention.

The present application is based on a Japanese patent application (No. 2023-033833) filed on Mar. 6, 2023, contents of which are incorporated herein by reference.

### REFERENCE SIGNS LIST

1: nut (moving body)
2: screw shaft (guide shaft)
3: ball
4: seal
5, 5': tube
6: tube presser

## Claims

1. A linear motion device comprising:
a guide shaft having a first ball rolling surface on an outer peripheral surface thereof;
a moving body having a second ball rolling surface facing the first ball rolling surface on an inner peripheral surface thereof and moving relative to the guide shaft; and
a ball rolling in a space formed between the first ball rolling surface and the second ball rolling surface, wherein
an average surface roughness Sa of at least one of the first ball rolling surface and the second ball rolling surface excluding a predetermined ball rolling direction component is 0.1 µm or more.

2. The linear motion device according to claim 1, wherein
the average surface roughness Sa excluding the ball rolling direction component is calculated by applying an FFT filter to surface property data of at least one of the first ball rolling surface and the second ball rolling surface under conditions of a ball rolling direction of ± 10° and a wavelength of 648.554 µm to 0.625 µm.

3. The linear motion device according to claim 1 or 2, wherein
the linear motion device is used at a rotation speed of at least 50 min⁻¹ or less.

4. A guide shaft used in a linear motion device, wherein:
the linear motion device includes:
a guide shaft having a first ball rolling surface on an outer peripheral surface thereof;
a moving body having a second ball rolling surface facing the first ball rolling surface on an inner peripheral surface thereof and moving relative to the guide shaft; and
a ball rolling in a space formed between the first ball rolling surface and the second ball rolling surface; and
an average surface roughness Sa of the first ball rolling surface excluding a predetermined ball rolling direction component is 0.1 µm or more.

5. A moving body used in a linear motion device, wherein:
the linear motion device includes:
a guide shaft having a first ball rolling surface on an outer peripheral surface thereof;
a moving body having a second ball rolling surface facing the first ball rolling surface on an inner peripheral surface thereof and moving relative to the guide shaft; and
a ball rolling in a space formed between the first ball rolling surface and the second ball rolling surface; and
an average surface roughness Sa of the second ball rolling surface excluding a predetermined ball rolling direction component is 0.1 µm or more.
